(19) Europäisches Patentamt
European Patent Office
Office européen des brevets

(11) EP 4 773 405 A1

(12) **EUROPEAN PATENT APPLICATION**
published in accordance with Art. 153(4) EPC

(43) Date of publication:
08.07.2026 Bulletin 2026/28

(51) International Patent Classification (IPC):
$H01M\ 50/533^{(2021.01)}$ $H01M\ 10/04^{(2006.01)}$
$H01M\ 50/40^{(2021.01)}$

(21) Application number: 24857894.0

(22) Date of filing: 30.05.2024

(52) Cooperative Patent Classification (CPC):
H01M 10/04; H01M 50/40; H01M 50/528;
H01M 50/533; H01M 50/536; Y02E 60/10

(86) International application number:
PCT/CN2024/096436

(87) International publication number:
WO 2025/044349 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 CN 202311135527

(71) Applicant: BYD Company Limited
Shenzhen, Guangdong 518118 (CN)

(72) Inventors:
• DENG, Dongjun
Shenzhen, Guangdong 518118 (CN)

• YUAN, Wansong
Shenzhen, Guangdong 518118 (CN)
• LIANG, Guihai
Shenzhen, Guangdong 518118 (CN)
• CHEN, Guangan
Shenzhen, Guangdong 518118 (CN)
• WANG, Xinyue
Shenzhen, Guangdong 518118 (CN)

(74) Representative: Mathys & Squire
32 London Bridge Street
The Shard
London SE1 9SG (GB)

(54) **BATTERY CELL, BATTERY APPARATUS AND ELECTRIC DEVICE**

(57) A battery cell (100) includes an electrode core (2) with a plurality of electrode plates (21). Two ends of the electrode plate (21) are respectively provided with a tab (22) and a slitting edge (23). The plurality of electrode plates (21) include first electrode plates (211) and second electrode plates (212) having opposite polarities. Tabs (22) having opposite polarities are located on different sides of the electrode core (2). Tabs (22) located on a same side are electrically connected to a first connection surface (31) of a connection member (3) by using a transition piece (6). A spacing between the first connection surface (31) and the slitting edges (23) is L, a quantity of electrode plates (21) with same polarity is n, a quantity of bent layers of the tabs (22) is m and a thickness is t, a quantity of bent layers of the transition piece (6) is m1 and an overall thickness is t1, a thickness of the battery cell (100) is T, and the following is satisfied: $0.5 \leq N = (L-5-0.1*T/2)/(n*m*t+m1*t1) \leq 15$.

FIG. 2

**Description**

**CROSS-REFERENCE TO RELATED APPLICATIONS**

This application is based on Chinese Patent Application No. 2023111355270, filed on August 31, 2023, and claims priority to the foregoing Chinese Patent Application, which is incorporated herein by reference in its entirety.

**TECHNICAL FIELD**

This application relates to the field of batteries, and in particular, to a battery cell, a battery apparatus, and an electrical device.

**BACKGROUND**

Among all energy forms, electric energy is easiest-to-use and cleanest energy with highest environmental friendliness and highest efficiency. Batteries are the best apparatuses for storing electric energy, are widely used in daily life, and have a significant influence on peoples' lives. With gradual development of battery technologies, batteries with high performance are increasingly popular. In conventional technologies, electrode plates of a battery are usually connected to internal lead-out strips and terminal posts by using tabs, enabling the battery to supply power externally. A bending state of the tabs directly affects quality of the battery. If a bending space for the tabs of the battery is not properly designed, overall quality of the battery is poor, which indicates that there is room for improvement.

**SUMMARY**

This application is intended to resolve at least one of technical problems in the related technology to some extent.
Therefore, an objective of this application is to provide a battery cell with low mounting difficulty, to ensure that tabs remain in a good state after bending, thereby preventing root parts of the tabs from compressing slitting edges of electrode plates with different polarity after bending, and improving safety and reliability of the battery cell.
According to an embodiment of this application, a battery cell is provided, including a housing assembly; and an electrode core, wherein the electrode core is provided in the housing assembly, the electrode core including a plurality of electrode plates, two ends of each electrode plate being respectively provided with a tab and a slitting edge, the plurality of electrode plates including first electrode plates and second electrode plates having opposite polarities, the first electrode plates and the second electrode plates being sequentially arranged, and the tabs of the first electrode plates and the tabs of the second electrode plates being located on different sides of the electrode core; and the tabs located on a same side being electrically connected to a first connection surface of a connection member by means of a transition piece, and on a same side of the electrode core, a spacing between the first connection surface and the slitting edges being L, a quantity of electrode plates with same polarity being n, a quantity of bent layers of the tabs being m, a quantity of bent layers of the transition piece being m1, an overall thickness of the transition piece being t1, a thickness of the battery cell being T, a thickness of the electrode plate being t, and the battery cell satisfies the following relational expression: $0.5 \leq N = (L-5-0.1*T/2)/\leq 15$.
According to the battery cell in this embodiment of this application, the tabs may be connected to the connection member by using the transition piece, to reduce mounting difficulty of the battery cell, and the spacing between the first connection surface and the slitting edges on a same side is defined in the foregoing range to ensure that the tabs remain in a good state after bending, to prevent root parts of the tabs from compressing slitting edges of electrode plates with different polarity after bending, thereby improving safety and reliability of the battery cell, ensuring space utilization of the battery cell, and improving quality of the battery cell.
According to the battery cell in some embodiments of this application, a value of the quantity of bent layers m of the tabs is $1 \leq m \leq 3$; and/or a value of the quantity of bent layers m1 of the transition piece is $1 \leq m1 \leq 3$.
According to the battery cell in some embodiments of this application, a value of a length H of the battery cell is 400 mm$\leq$H$\leq$1500 mm.
According to the battery cell in some embodiments of this application, a value of a width W of the battery cell is 80 mm$\leq$W$\leq$240 mm.
According to the battery cell in some embodiments of this application, a value of the thickness T of the battery cell is 10 mm$\leq$T$\leq$40 mm.
According to the battery cell in some embodiments of this application, the tabs of the electrode plates having opposite polarities are located on two sides of the electrode core in a length direction of the electrode core.
According to the battery cell in some embodiments of this application, the electrode core includes two opposite first surfaces, and an area of the first surface is greater than an area of another surface of the electrode core; and the battery cell further includes two insulating films, and the two insulating films are respectively attached to the two first surfaces.

According to the battery cell in some embodiments of this application, in a width direction of the electrode core, side edges of the two insulating films on the same side are lap-jointed to isolate the electrode core from the housing assembly.

According to the battery cell in some embodiments of this application, in the width direction of the electrode core, the electrode core is provided with opposite second surfaces, the second surface is provided with an adhesive member, and there is an overlapping region between the adhesive member and each insulating film.

According to the battery cell in some embodiments of this application, a width of the electrode core is set to W, and a thickness of the electrode core is set to T; and in a direction parallel to the width direction of the electrode core, a width of the insulating film is set to W2, and the following is satisfied: $W+T \leq W2 \leq W+2T$.

According to the battery cell in some embodiments of this application, the housing assembly includes a housing body and cover plates, and in the length direction of the electrode core, the cover plates are provided at two ends of the housing assembly to define an accommodating chamber configured to place the electrode core, and each cover plate is provided with a terminal post.

According to the battery cell in some embodiments of this application, the battery cell further includes spacer rings, wherein the spacer ring is located between an inner side of the cover plate and an end part of the electrode core, the spacer ring including a support portion abutting against the electrode core, and each of two sides of the tabs being provided with the support portion in the width direction of the electrode core.

According to the battery cell in some embodiments of this application, in the direction parallel to the width direction of the electrode core, the width of the electrode core is set to W, a support width of the support portion is set to L4, and the following is satisfied: $L4 \leq 1/3W$.

This application further provides a battery apparatus.

The battery apparatus according to an embodiment of this application includes: a box; and a plurality of battery cells, wherein the battery cell is the battery cell in any of the foregoing embodiments, and the plurality of battery cells are provided in the box.

According to the battery apparatus in this embodiment of this application, the tabs may be connected to the connection member by using the transition piece, to reduce mounting difficulty of the battery cell, and the spacing between the first connection surface and the slitting edges on a same side is defined in the foregoing range to ensure that the tabs remain in a good state after bending, to prevent root parts of the tabs from compressing slitting edges of electrode plates with different polarity after bending, thereby improving safety and reliability of the battery cell, ensuring space utilization of the battery cell, improving quality of the battery cell, and improving reliability of the battery apparatus.

This application further provides an electrical device.

The electrical device according to this embodiment of this application includes the battery apparatus according to any of the foregoing embodiments.

According to the electrical device in this embodiment of this application, the tabs may be connected to the connection member by using the transition piece, to reduce mounting difficulty of the battery cell, and the spacing between the first connection surface and the slitting edges on a same side is defined in the foregoing range to ensure that the tabs remain in a good state after bending, to prevent root parts of the tabs from compressing slitting edges of electrode plates with different polarity after bending, thereby improving safety and reliability of the battery cell, ensuring space utilization of the battery cell, improving quality of the battery cell, and improving overall performance of the electrical device.

Some of additional aspects and advantages of this application are provided in the following descriptions, and some of the additional aspects and the advantages become apparent from the following descriptions or are learned from practice of this application.

## BRIEF DESCRIPTION OF DRAWINGS

FIG. 1 is a schematic diagram of a structure of a battery cell according to an embodiment of this application;

FIG. 2 is a cross-sectional view of mounting a connection member according to an embodiment of this application;

FIG. 3 is a cross-sectional view of a battery cell according to an embodiment of this application;

FIG. 4 is a schematic diagram of mounting an insulating film according to an embodiment of this application;

FIG. 5 is an exploded view of a battery cell according to an embodiment of this application; and

FIG. 6 shows a test data table of a battery cell according to an embodiment of this application.

Reference numerals:

battery cell 100;

housing assembly 1; housing body 11, cover plate 12; terminal post 13;

electrode core 2; electrode plate 21; first electrode plate 211; second electrode plate 212; tab 22; slitting edge 23; first surface 24; second surface 25; connection member 3; first connection surface 3 1; insulating film 4; side edge 41; spacer ring 5; support portion 51; and transition piece 6.

## DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The embodiments described below with reference to the accompanying drawings are examples and aim to explain this application and cannot be construed as limiting this application.

The following describes a battery cell 100 according to an embodiment of this application with reference to the accompanying drawings.

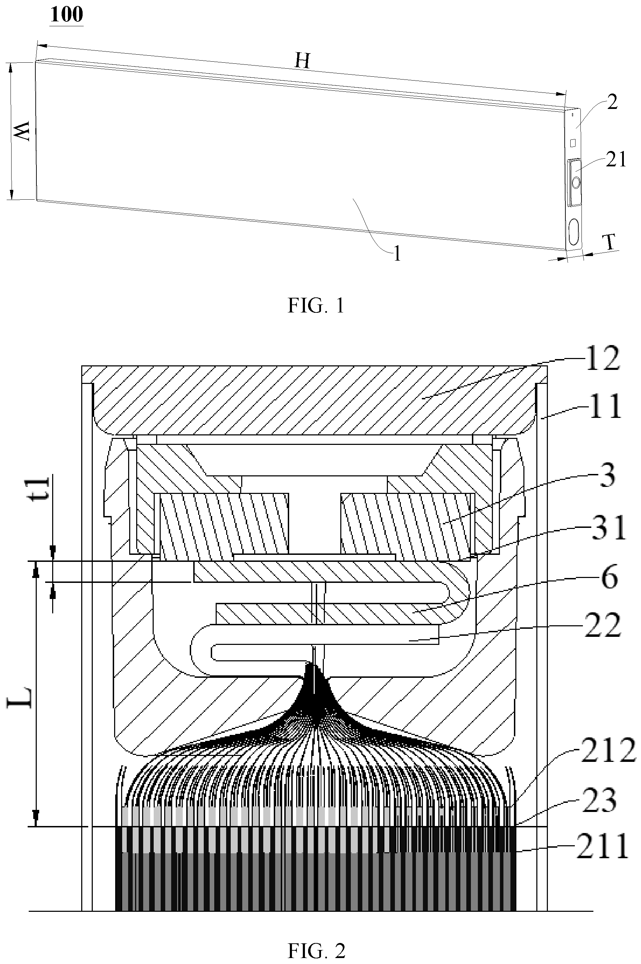

As shown in FIG. 1 to FIG. 6, the battery cell 100 according to this embodiment of this application includes a housing assembly 1 and an electrode core 2. The electrode core 2 is provided in the housing assembly 1, the electrode core 2 includes a plurality of electrode plates 21, two ends of each electrode plate 21 are respectively provided with a tab 22 and a slitting edge 23, the plurality of electrode plates 21 include first electrode plates 211 and second electrode plates 212 having opposite polarities, the first electrode plates 211 and the second electrode plates 212 are sequentially arranged, and the tabs 22 of the first electrode plates 211 and the tabs 22 of the second electrode plates 212 are located on different sides of the electrode core 2; and the tabs 22 located on a same side are electrically connected to a first connection surface 31 of a connection member 3 by using a transition piece 6, and on a same side of the electrode core 2, a spacing between the first connection surface 31 and the slitting edges 23 is L, a quantity of electrode plates 21 with same polarity is n, a quantity of bent layers of the tabs 22 is m, a quantity of bent layers of the transition piece 6 is m1, an overall thickness of the transition piece 6 is t1, a thickness of the battery cell 100 is T, a thickness of the electrode plate 21 is t, and the battery cell 100 satisfies the following relational expression: $0.5 \leq N = (L-5-0.1*T/2)/(n*m*t+m1*t1) \leq 15$.

Therefore, mounting difficulty of the battery cell 100 can be reduced, and it can be ensured that the tabs 22 remain in a good state after bending, thereby preventing root parts of the tabs 22 from compressing slitting edges 23 of electrode plates 21 with different polarity after bending, and improving safety and reliability of the battery cell 100.

For example, as shown in FIG. 1 to FIG. 3, the battery cell 100 is provided with the housing assembly 1 and the electrode core 2. The housing assembly 1 is constructed as a square structure and is formed with an accommodating chamber. The electrode core 2 is mounted in the accommodating chamber of the housing assembly 1, and the housing assembly 1 is provided with terminal posts 13. The terminal posts 13 may run through the housing assembly 1 in a thickness direction to extend into the accommodating chamber and are opposite to the electrode core 2. The electrode core 2 includes a plurality of electrode plates 21, two ends of each electrode plate 21 are respectively a die-cutting edge and a slitting edge 23, and the die-cutting edge is connected to the tab 22. The plurality of electrode plates 21 include first electrode plates 211 and second electrode plates 212 having opposite polarities, for example, the first electrode plates 211 are provided as negative electrode plates and the second electrode plates 212 are provided as positive electrode plates. A plurality of first electrode plates 211 and a plurality of second electrode plates 212 are sequentially arranged and isolated, that is, arranged in a sequence of the first electrode plate 211, the second electrode plate 212, the first electrode plate 211, and the second electrode plate 212. The tabs 22 of the first electrode plates 211 and the tabs 22 of the second electrode plates 212 are located on different sides of the electrode core 2, so that tabs 22 of electrode plates 21 having opposite polarities are located on different sides, and the tabs 22 of the electrode plates 21 having opposite polarities can be staggered, thereby avoiding electrical connection between the electrode plates 21 having opposite polarities.

In addition, the housing assembly 1 may be provided with the connection member 3, one side of the connection member 3 is electrically connected to the terminal post 13 and the other side is formed with the first connection surface 31. The tabs 22 located on one side of the electrode core 2 may be connected to the first connection surface 31 by using a transition piece 6, so that the electrode core 2 can be connected to the terminal post 13 by using the tabs 22, the transition piece 6, and the connection member 3, and the battery cell 100 can supply power externally by using the terminal post 13. It should be noted that both the transition piece 6 and the tabs 22 are bent, so that the transition piece 6 and the tabs 22 are in large-area contact, and the transition piece 6 and the first connection surface 31 are in large-area contact.

In a specific mounting process, the transition piece 6 is first welded to a plurality of tabs 22 located on a same side of the electrode core 2, and then the transition piece 6 is connected to the first connection surface 31, to connect the terminal post 13 to the tabs 22 of a plurality of electrode plates 21 with same polarity. Therefore, this is conduciveto reducing mounting difficulty of the battery cell 100.

On the same side of the electrode core 2, the spacing between the first connection surface 31 and the slitting edges 23 on the same side is set to L, the quantity of electrode plates 21 (for example, positive electrode plates or negative electrode plates) with same polarity is set to n, the quantity of bent layers of the tabs 22 is set to m, the quantity of bent layers of the transition piece 6 is set to m1, the overall thickness of the transition piece 6 is set to t1, the thickness of the battery cell 100 is set to T, the thickness of the electrode plate 21 is set to t, and the battery cell 100 satisfies the following relational expression: $0.5 \leq N=(L-5-0.1*T/2)/(n*m*t+m1*t1) \leq 15$.

That is, the spacing L between the first connection surface 31 and the slitting edges 23 on the same side may be greater than or equal to a sum of 0.5 times a reference coefficient plus 0.05 times a thickness of the electrode core 2 and 5 mm, and less than or equal to a sum of 15 times the reference coefficient plus 0.05 times the thickness of the battery cell 100 and 5 mm. The reference coefficient is a sum of a product of a total thickness of a plurality of electrode plates 21 with same polarity multiplied by the quantity of bent layers of the tabs 22 plus a product of the overall thickness of the transition piece 6 multiplied by the quantity of bent layers of the transition piece 6. In this way, the spacing L between the first connection surface 31 and the slitting edges 23 on the same side is defined in the foregoing range to ensure that the tabs 22 remain in a good state after bending, to prevent root parts of the tabs 22 from compressing slitting edges 23 of electrode plates 21 with different polarity after bending, thereby improving safety and reliability of the battery cell 100, and ensuring space utilization of the battery cell 100. Therefore, this is conducive to improving quality of the battery cell 100.

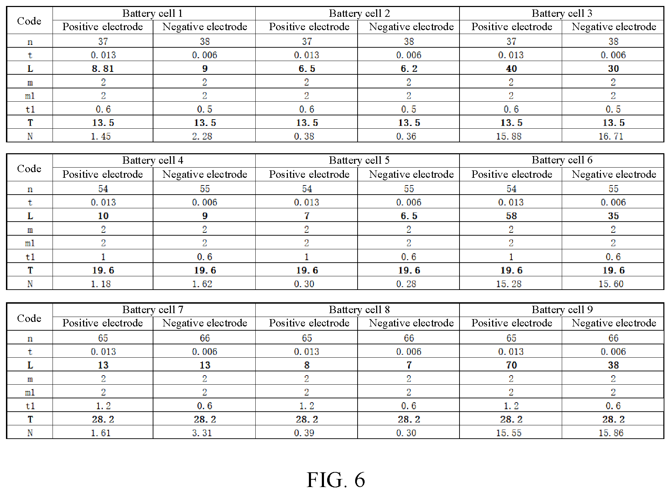

Specifically, in the test data table of the battery cell in FIG. 6, as shown in test data 1, a quantity of positive electrode plates is 37 and a thickness is set to 0.013 mm, a quantity of negative electrode plates is 38 and a thickness is set to 0.006 mm, the thickness of the battery cell 100 is 13.5 mm, the quantity of bent layers of the tabs 22 is 2, the quantity of bent layers of the transition piece is 2, an overall thickness of a transition piece 6 corresponding to the positive electrode plates is set to 0.6 mm, an overall thickness of a transition piece 6 corresponding to the negative electrode plates is set to 0.5 mm, a spacing between the slitting edges 23 of the negative electrode plates and the first connection surface 31 on a corresponding side is set to 8.81 mm, and a spacing between the slitting edges 23 of the positive electrode plates and the first connection surface 31 on a corresponding side is set to 9 mm. In this case, a coefficient N corresponding to the positive electrode plates is 1.45, and a coefficient N corresponding to the negative electrode plates is 2.28. Therefore, the coefficients satisfy the foregoing specified ranges, and a bending state of the tabs 22 is good.

As shown in test data 2, a quantity of positive electrode plates is 37 and a thickness is set to 0.013 mm, a quantity of negative electrode plates is 38 and a thickness is set to 0.006 mm, the thickness of the battery cell 100 is 13.5 mm, the quantity of bent layers of the tabs 22 is 2, the quantity of bent layers of the transition piece is 2, an overall thickness of a transition piece 6 corresponding to the positive electrode plates is set to 0.6 mm, an overall thickness of a transition piece 6 corresponding to the negative electrode plates is set to 0.5 mm, a spacing between the slitting edges 23 of the negative electrode plates and the first connection surface 31 on a corresponding side is set to 6.5 mm, and a spacing between the slitting edges 23 of the positive electrode plates and the first connection surface 31 on a corresponding side is set to 6.2 mm. In this case, a coefficient N corresponding to the positive electrode plates is 0.38, and a coefficient N corresponding to the negative electrode plates is 0.36. Therefore, the coefficients are less than the foregoing specified ranges, the slitting edges 23 are extremely close to the connection member 3, and the tabs 22 are excessively compressed by the connection member 3, and are prone to short-circuiting.

As shown in test data 3, a quantity of positive electrode plates is 37 and a thickness is set to 0.013 mm, a quantity of negative electrode plates is 38 and a thickness is set to 0.006 mm, the thickness of the battery cell 100 is 13.5 mm, the quantity of bent layers of the tabs 22 is 2, the quantity of bent layers of the transition piece is 2, an overall thickness of a transition piece 6 corresponding to the positive electrode plates is set to 0.6 mm, an overall thickness of a transition piece 6 corresponding to the negative electrode plates is set to 0.5 mm, a spacing between the slitting edges 23 of the negative electrode plates and the first connection surface 31 on a corresponding side is set to 40 mm, and a spacing between the slitting edges 23 of the positive electrode plates and the first connection surface 31 on a corresponding side is set to 30 mm. In this case, a coefficient N corresponding to the positive electrode plates is 15.88, and a coefficient N corresponding to the negative electrode plates is 16.71. Therefore, the coefficients are greater than the foregoing specified ranges, the slitting edges 23 are extremely far from the connection member 3, and space utilization is low.

As shown in test data 4, a quantity of positive electrode plates is 54 and a thickness is set to 0.013 mm, a quantity of negative electrode plates is 55 and a thickness is set to 0.006 mm, the thickness of the battery cell 100 is 19.6 mm, the quantity of bent layers of the tabs 22 is 2, the quantity of bent layers of the transition piece is 2, an overall thickness of a transition piece 6 corresponding to the positive electrode plates is set to 1 mm, an overall thickness of a transition piece 6 corresponding to the negative electrode plates is set to 0.6 mm, a spacing between the slitting edges 23 of the negative electrode plates and the first connection surface 31 on a corresponding side is set to 10 mm, and a spacing between the slitting edges 23 of the positive electrode plates and the first connection surface 31 on a corresponding side is set to 9 mm. In this case, a coefficient N corresponding to the positive electrode plates is 1.18, and a coefficient N corresponding to the negative electrode plates is 1.62. Therefore, the coefficients satisfy the foregoing specified ranges, and a bending state of the tabs 22 is good.

As shown in test data 5, a quantity of positive electrode plates is 54 and a thickness is set to 0.013 mm, a quantity of negative electrode plates is 55 and a thickness is set to 0.006 mm, the thickness of the battery cell 100 is 19.6 mm, the quantity of bent layers of the tabs 22 is 2, the quantity of bent layers of the transition piece is 2, an overall thickness of a transition piece 6 corresponding to the positive electrode plates is set to 1 mm, an overall thickness of a transition piece 6 corresponding to the negative electrode plates is set to 0.6 mm, a spacing between the slitting edges 23 of the negative electrode plates and the first connection surface 31 on a corresponding side is set to 7 mm, and a spacing between the slitting edges 23 of the positive electrode plates and the first connection surface 31 on a corresponding side is set to 6.5 mm. In this case, a coefficient N corresponding to the positive electrode plates is 0.30, and a coefficient N corresponding to the negative electrode plates is 0.28. Therefore, the coefficients are less than the foregoing specified ranges, the slitting edges 23 are extremely close to the connection member 3, and the tabs 22 are excessively compressed by the connection member 3, and are prone to short-circuiting.

As shown in test data 6, a quantity of positive electrode plates is 54 and a thickness is set to 0.013 mm, a quantity of negative electrode plates is 55 and a thickness is set to 0.006 mm, the thickness of the battery cell 100 is 19.6 mm, the quantity of bent layers of the tabs 22 is 2, the quantity of bent layers of the transition piece is 2, an overall thickness of a transition piece 6 corresponding to the positive electrode plates is set to 1 mm, an overall thickness of a transition piece 6 corresponding to the negative electrode plates is set to 0.6 mm, a spacing between the slitting edges 23 of the negative electrode plates and the first connection surface 31 on a corresponding side is set to 58 mm, and a spacing between the slitting edges 23 of the positive electrode plates and the first connection surface 31 on a corresponding side is set to 35 mm. In this case, a coefficient N corresponding to the positive electrode plates is 15.28, and a coefficient N corresponding to the negative electrode plates is 15.60. Therefore, the coefficients are greater than the foregoing specified ranges, the slitting edges 23 are extremely far from the connection member 3, and space utilization is low.

As shown in test data 7, a quantity of positive electrode plates is 65 and a thickness is set to 0.013 mm, a quantity of negative electrode plates is 66 and a thickness is set to 0.006 mm, the thickness of the battery cell 100 is 28.2 mm, the quantity of bent layers of the tabs 22 is 2, the quantity of bent layers of the transition piece is 2, an overall thickness of a transition piece 6 corresponding to the positive electrode plates is set to 1.2 mm, an overall thickness of a transition piece 6 corresponding to the negative electrode plates is set to 0.6 mm, a spacing between the slitting edges 23 of the negative electrode plates and the first connection surface 31 on a corresponding side is set to 13 mm, and a spacing between the slitting edges 23 of the positive electrode plates and the first connection surface 31 on a corresponding side is set to 13 mm. In this case, a coefficient N corresponding to the positive electrode plates is 1.61, and a coefficient N corresponding to the negative electrode plates is 3.31. Therefore, the coefficients satisfy the foregoing specified ranges, and a bending state of the tabs 22 is good.

As shown in test data 8, a quantity of positive electrode plates is 65 and a thickness is set to 0.013 mm, a quantity of negative electrode plates is 66 and a thickness is set to 0.006 mm, the thickness of the battery cell 100 is 28.2 mm, the quantity of bent layers of the tabs 22 is 2, the quantity of bent layers of the transition piece is 2, an overall thickness of a transition piece 6 corresponding to the positive electrode plates is set to 1.2 mm, an overall thickness of a transition piece 6 corresponding to the negative electrode plates is set to 0.6 mm, a spacing between the slitting edges 23 of the negative electrode plates and the first connection surface 31 on a corresponding side is set to 8 mm, and a spacing between the slitting edges 23 of the positive electrode plates and the first connection surface 31 on a corresponding side is set to 7 mm. In this case, a coefficient N corresponding to the positive electrode plates is 0.39, and a coefficient N corresponding to the negative electrode plates is 0.30. Therefore, the coefficients are less than the foregoing specified ranges, the slitting edges 23 are extremely close to the connection member 3, and the tabs 22 are excessively compressed by the connection member 3, and are prone to short-circuiting.

As shown in test data 9, a quantity of positive electrode plates is 65 and a thickness is set to 0.013 mm, a quantity of negative electrode plates is 66 and a thickness is set to 0.006 mm, the thickness of the battery cell 100 is 28.2 mm, the quantity of bent layers of the tabs 22 is 2, the quantity of bent layers of the transition piece is 2, an overall thickness of a transition piece 6 corresponding to the positive electrode plates is set to 1.2 mm, an overall thickness of a transition piece 6 corresponding to the negative electrode plates is set to 0.6 mm, a spacing between the slitting edges 23 of the negative electrode plates and the first connection surface 31 on a corresponding side is set to 70 mm, and a spacing between the slitting edges 23 of the positive electrode plates and the first connection surface 31 on a corresponding side is set to 38 mm. In this case, a coefficient N corresponding to the positive electrode plates is 15.55, and a coefficient N corresponding to the negative electrode plates is 15.86. Therefore, the coefficients are greater than the foregoing specified ranges, the slitting edges 23 are extremely far from the connection member 3, and space utilization is low.

According to the battery cell 100 in this embodiment of this application, the tabs 22 may be connected to the connection member 3 by using the transition piece 6, to reduce mounting difficulty of the battery cell 100, and the spacing between the first connection surface 31 and the slitting edges 23 on a same side is defined in the foregoing range to ensure that the tabs 22 remain in a good state after bending, to prevent root parts of the tabs 22 from compressing slitting edges 23 of electrode plates 21 with different polarity after bending, thereby improving safety and reliability of the battery cell 100, ensuring space utilization of the battery cell 100, and improving quality of the battery cell 100.

In some embodiments of this application, a value of the quantity of bent layers m of the tabs 22 is $1 \leq m \leq 3$; and/or a value of the quantity of bent layers m1 of the transition piece 6 is $1 \leq m1 \leq 3$.

For example, as shown in FIG. 2, the quantity of bent layers m of the tabs 22 may be set to 1, the quantity of bent layers m of the tabs 22 may be set to 2, or the quantity of bent layers m of the tabs 22 may be set to 3. This is not limited in this application. In addition, the quantity of bent layers m1 of the transition piece 6 may be set to 1, the quantity of bent layers m1 of the transition piece 6 may be set to 2, or the quantity of bent layers m1 of the transition piece 6 may be set to 3. This is not limited in this application.

Such an arrangement can prevent stress from being excessively large due to an excessively large quantity of bent layers, reduce an impact of the tabs 22 and the transition piece 6 on the slitting edges 23 of the electrode plates 21 having opposite polarities, and improve reliability of the battery cell 100.

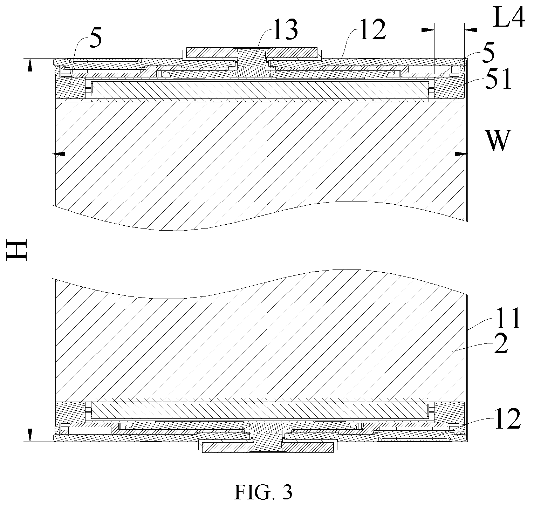

In some embodiments of this application, a value of a length H of the battery cell 100 is 400 mm≤H≤1500 mm. For example, as shown in FIG. 3, the length of the battery cell 100 may be set to H. The length H of the battery cell 100 may be 600 mm; the length H of the battery cell 100 may be 950 mm; the length H of the battery cell 100 may be 1300 mm; or the length H of the battery cell 100 may be any value that satisfies a condition. This is not limited in this application.

Such an arrangement can prevent the length of the battery cell 100 from being excessively large, improve structural stability of the battery cell 100, and prevent the length of the battery cell 100 from being excessively small, thereby improving energy density of the battery cell 100 and improving practicality of the battery cell 100.

In some embodiments of this application, a value of a width W of the battery cell 100 is 80 mm≤W≤240 mm. For example, as shown in FIG. 3, the value of the width W of the battery cell 100 may be 100 mm; the value of the width W of the battery cell 100 may be 160 mm; the value of the width W of the battery cell 100 may be 220 mm; or the value of the width W of the battery cell 100 may be any value that satisfies a condition. This is not limited in this application. Such an arrangement can prevent the width of the battery cell 100 from being excessively large, improve structural stability of the battery cell 100, and prevent the width of the battery cell 100 from being excessively small, thereby improving energy density of the battery cell 100.

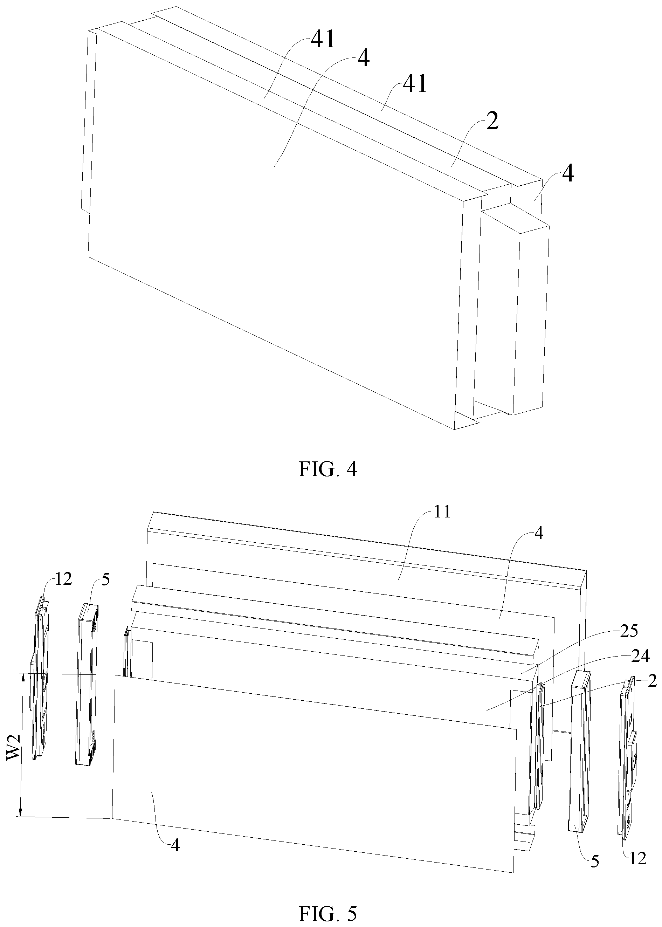

In some embodiments of this application, a value of the thickness T of the battery cell 100 is 10 mm≤T≤40 mm. For example, as shown in FIG. 4, the value of the thickness T of the battery cell 100 may be 15 mm; the value of the thickness T of the battery cell 100 may be 25 mm; the value of the thickness T of the battery cell 100 may be 35 mm; or the value of the thickness T of the battery cell 100 may be any value that satisfies a condition. This is not limited in this application. Such an arrangement can prevent heat dissipation performance of the battery cell 100 from being affected by an excessively large thickness of the battery cell 100, and prevent improvement of structural stability of the battery cell 100 from being affected by an excessively small thickness of the battery cell 100, thereby improving practicality of the battery cell 100.

In some embodiments of this application, the tabs 22 of the electrode plates 21 having opposite polarities are located on two sides of the electrode core 2 in a length direction of the electrode core 2. For example, as shown in FIG. 3, two ends of the electrode plate 21 in the length direction of the electrode core 2 may be respectively provided as a first end and a second end, and two ends of the housing assembly 1 in the length direction may be separately provided with the terminal post 13. The tab 22 of the positive electrode plate and the slitting edge 23 of the negative electrode plate are provided at one end of the electrode core 2 in the length direction, and the tab 22 of the positive electrode plate may be electrically connected to the terminal post 13 at a corresponding end. The tab 22 of the negative electrode plate and the slitting edge 23 of the positive electrode plate are provided at the other end of the electrode core 2 in the length direction, and the tab 22 of the negative electrode plate may be electrically connected to the terminal post 13 at a corresponding end. Such an arrangement can reduce the probability of short-circuiting of the battery cell 100, thereby improving reliability and practicability of the battery cell 100.

In some embodiments of this application, the electrode core 2 includes two opposite first surfaces 24, and an area of the first surface 24 is greater than an area of another surface of the electrode core 2. The battery cell 100 further includes two insulating films 4, and the two insulating films 4 are respectively attached to the two first surfaces 24.

For example, as shown in FIG. 4 and FIG. 5, opposite side surfaces of the electrode core 2 in a thickness direction may be provided as the first surfaces 24, and the area of the first surface 24 is greater than the area of the another surface of the electrode core 2. The battery cell 100 may be provided with two insulating films 4. The insulating film 4 is provided as a thermal composite film. The two insulating films 4 are respectively adhered to the two first surfaces 24, and end parts of the two insulating films 4 in a width direction may be connected by using an insulating member (for example, an insulating connection film), so that the insulating films 4 can surround the electrode core 2 to isolate the electrode core 2 from the housing assembly 1. In addition, the insulating films 4 may be configured to be adhered to an inner peripheral wall of the housing assembly 1, so that the electrode core 2 can be adhered in the housing assembly 1 by using the insulating films 4.

It will be understood that adhering the insulating films 4 on the first surfaces 24 can improve mounting stability of the insulating films 4, and increase a connection area between the housing assembly 1 and the electrode core 2, thereby improving mounting stability of the battery cell 100.

In some embodiments of this application, in a width direction of the electrode core 2, side edges 41 of the two insulating films 4 on a same side are lap-jointed to isolate the electrode core 2 from the housing assembly 1.

For example, as shown in FIG. 4 and FIG. 5, a width of the insulating film 4 may be chosen to be greater than a width of the electrode core 2, so that two ends of the insulating film 4 in the width direction can respectively extend to two side surfaces of the electrode core 2 in the width direction. The side edges 41 that are of the two insulating films 4 and that extend to a same side surface of the electrode core 2 in the width direction may be lap-jointed, so that the two insulating films 4 can surround and can be fastened to an outer peripheral side of the electrode core 2, to isolate the electrode core 2 from the housing assembly 1. This helps reduce a quantity of parts of the battery cell 100, reduce processing costs, improve insulation performance of the battery cell 100, and improve reliability of the battery cell 100.

In some embodiments of this application, in the width direction of the electrode core 2, the electrode core 2 is provided with opposite second surfaces 25, the second surface 25 is provided with an adhesive member, and there is an overlapping region between the adhesive member and each insulating film 4.

For example, as shown in FIG. 4 and FIG. 5, a side surface of the electrode core 2 in the width direction may be provided as a second surface 25. Two second surfaces 25 are opposite to each other. The side edge 41 that is of the insulating film 4 and that is attached to the first surface 24 may extend to a position directly facing the second surface 25. The side edges 41 that are of the two insulating films 4 and that extend to the second surface 25 are at least partially not overlapped. The second surface 25 is provided with an adhesive member. There is an overlapping region between the adhesive member and each insulating film 4. The adhesive member may be separately adhered to the side edges 41 of the two insulating films 4 to separately fasten the side edges 41 of the two insulating films 4 to the second surface 25. This helps improve mounting stability of the insulating films 4, and improve reliability of the battery cell 100.

In some embodiments of this application, a width of the electrode core 2 is set to W, and a thickness of the electrode core 2 is set to T; and in a direction parallel to the width direction of the electrode core 2, a width of the insulating film 4 is set to W2, and the following is satisfied: $W+T \leq W2 \leq W+2T$.

For example, as shown in FIG. 4 and FIG. 5, the width of the electrode core 2 may be set to W, and the thickness of the electrode core 2 may be set to T. In the direction parallel to the width direction of the electrode core 2, the width of the insulating film 4 may be set to W2, and the following is satisfied: $W+T \leq W2 \leq W+2T$. That is, the width W2 of the insulating film 4 may be set to be greater than or equal to a sum of the thickness T of the electrode core 2 and the width W of the electrode core 2. When the insulating film 4 is attached to the first surface 24 of the electrode core 2, the side edge 41 of the insulating film 4 may extend to the side surface of the electrode core 2 in the width direction, and a size of the side edge 41 that is of the insulating film 4 and that extends to the side surface of the electrode core 2 in the width direction is greater than or equal to 1/2T, so that the side edges 41 that are of the two insulating films 4 and that extend to a same side of the electrode core 2 in the width direction come into contact or have an overlapping part, and the side edges 41 of the two insulating films 4 can be lap-jointed.

In addition, the width W2 of the insulating film 4 may be set to be less than or equal to a sum of the thickness T of the electrode core 2 and twice the width W of the electrode core 2, so that the size of the side edge 41 that is of the insulating film 4 and that extends to the side surface of the electrode core 2 in the width direction is less than or equal to T, to prevent the side edge 41 of the insulating film 4 from extending to the other first surface 24, thereby facilitating reduction of mounting difficulty of the insulating film 4. This helps reduce mounting difficulty of the battery cell 100, and improve practicality of the battery cell 100.

In some embodiments of this application, the housing assembly 1 includes a housing body 11 and cover plates 12. In the length direction of the electrode core 2, the cover plates 12 are provided at two ends of the housing body 11 to define an accommodating chamber configured to place the electrode core 2, and each cover plate 12 is provided with a terminal post 13.

For example, as shown in FIG. 5, the housing assembly 1 includes a housing body 11 and cover plates 12. The housing body 11 is constructed as a square barrel. Two ends of the housing body 11 in the length direction are respectively formed with openings. There are two cover plates 12. The two cover plates 12 are configured to be respectively mounted at the two openings of the housing body 11 to seal the openings, so that a sealed accommodating chamber is defined by the housing body 11 and the cover plates 12. The electrode core 2 is mounted in the accommodating chamber, each cover plate 12 is provided with the terminal post 13, the terminal post 13 runs through the cover plate 12 in the thickness direction, and the terminal post 13 is configured to be electrically connected to the tabs 22 of the electrode plates 21 with same polarity, so that the electrode core 2 can supply power externally. Such an arrangement facilitates reduction of processing difficulty of the battery cell 100, thereby improving reliability of the battery cell 100.

In some embodiments of this application, as shown in FIG. 5, the battery cell 100 in this embodiment of this application further includes: spacer rings 5, where the spacer ring 5 is located between an inner side of the cover plate 12 and an end part of the electrode core 2, the spacer ring 5 includes a support portion 51 abutting against the electrode core 2, and each of two sides of the tabs 22 is provided with the support portion 51 in the width direction of the electrode core 2.

For example, as shown in FIG. 5, the battery cell 100 may be provided with the spacer rings 5, and a material of the spacer ring 5 is an elastic insulating material such as rubber. The spacer ring 5 is conformally designed relative to the opening of the housing body 11, and the spacer ring 5 is configured to be mounted between the inner side (that is, a side facing the accommodating chamber) of the cover plate 12 and the end part of the electrode core 2, so that the spacer ring 5 can isolate the cover plate 12 from the electrode core 2, to avoid short-circuiting of the battery cell 100. In addition, the support portion 51 may be formed on a side that is of the spacer ring 5 and that faces the electrode core 2, the support portion 51 is constructed as a bump structure, two ends of the spacer ring 5 in the width direction of the electrode core 2 are respectively provided with the support portion 51, and the two support portions 51 are respectively located on two sides of the tabs 22 and are configured to be supported on end surfaces of the electrode core 2. Therefore, the support portions 51 can avoid the tabs 22 and effectively limit the electrode core 2, thereby improving mounting stability of the electrode core 2.

In some embodiments of this application, in the direction parallel to the width direction of the electrode core 2, the width of the electrode core 2 is set to W, a support width of the support portion 51 is set to L4, and the following is satisfied: L4≤1/3W.

For example, as shown in FIG. 3, the width of the electrode core 2 may be set to W, and in the direction parallel to the width direction of the electrode core 2, the support width of the support portion 51 may be set to L4, and the following is satisfied: L4≤1/3W. That is, the width of the support portion 51 may be set to be less than or equal to one-third of the width of the electrode core 2. A sum of widths of the two support portions 51 is less than or equal to two-thirds of the width of the electrode core 2. The two support portions 51 are spaced apart and define an avoidance space. The avoidance space is configured to avoid the tabs 22 of the electrode core 2, and a width of the avoidance space is greater than or equal to one-third of the width of the electrode core 2. Therefore, sufficient space may be reserved for arrangement of the tabs 22, which reduces mounting difficulty of the tabs 22 and improves reliability of the battery cell 100.

This application further provides a battery apparatus.

The battery apparatus according to this embodiment of this application includes: a box and a plurality of battery cells 100, where the battery cell 100 is the battery cell 100 in any of the foregoing embodiments, and the plurality of battery cells 100 are provided in the box.

For example, the battery apparatus may be provided with the box and the plurality of battery cells 100. The box may be constructed as a square structure, a mounting chamber is formed in the box, the plurality of battery cells 100 are all mounted in the mounting chamber, and the plurality of battery cells 100 may be sequentially arranged or spaced apart. The plurality of battery cells 100 are used for synchronous charging/discharging, so that a battery module can stably operate.

According to the battery apparatus in this embodiment of this application, the tabs 22 may be connected to the connection member 3 by using the transition piece 6, to reduce mounting difficulty of the battery cell 100, and the spacing between the first connection surface 31 and the slitting edges 23 on a same side is defined in the foregoing range to ensure that the tabs 22 remain in a good state after bending, to prevent root parts of the tabs 22 from compressing slitting edges 23 of electrode plates 21 with different polarity after bending, thereby improving safety and reliability of the battery cell 100, ensuring space utilization of the battery cell 100, improving quality of the battery cell 100, and improving reliability of the battery apparatus.

This application further provides an electrical device.

The electrical device according to this embodiment of this application includes the battery apparatus according to any of the foregoing embodiments.

According to the electrical device in this embodiment of this application, the tabs 22 may be connected to the connection member 3 by using the transition piece 6, to reduce mounting difficulty of the battery cell 100, and the spacing between the first connection surface 31 and the slitting edges 23 on a same side is defined in the foregoing range to ensure that the tabs 22 remain in a good state after bending, to prevent root parts of the tabs 22 from compressing slitting edges 23 of electrode plates 21 with different polarity after bending, thereby improving safety and reliability of the battery cell 100, ensuring space utilization of the battery cell 100, improving quality of the battery cell 100, improving reliability of the battery apparatus, and improving overall performance of the electrical device.

In the description of this application, it will be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, is an orientation or positional relationship shown based on the accompanying drawings, and is only for ease of describing this application and simplifying the descriptions, rather than indicating or implying that the apparatus or element referred to must have a specific orientation or be constructed and operated in a specific orientation, and therefore will not be understood as a limitation on this application.

In addition, terms "first" and "second" are merely used for description purposes, and will not be understood as indicating or implying relative importance or implicitly indicating a quantity of technical features indicated. Therefore, a feature defined by "first" or "second" may explicitly or implicitly include one or more such features. In the descriptions of this application, "a plurality of" means two or more, unless otherwise explicitly defined.

In this application, unless otherwise explicitly specified and defined, terms such as "mount", "interconnect", "connect", and "fix" will be understood in a broad sense, for example, will be understood as a fixed connection, a detachable connection, or an integrated connection, will be understood as a mechanical connection, or an electrical connection, or will be understood as a direct connection or an indirect connection through an intermediate medium, or will be understood as internal communication between two elements or an interaction relationship between two elements. A person of ordinary skill in the art may understand specific meanings of the foregoing terms in this application based on specific situations.

In this application, unless otherwise explicitly specified and defined, that the first feature is "above" or "below" the second feature may be that the first feature and the second feature are in direct contact, or the first feature and the second feature are in indirect contact through an intermediate medium. In addition, that the first feature is "above", "over", or "on top of" the second feature may be that the first feature is directly above or obliquely above the second feature, or merely indicates that a level height of the first feature is higher than that of the second feature. That the first feature is "below", "under", or "beneath" the second feature may be that the first feature is directly below or obliquely below the second feature, or merely indicates that a level height of the first feature is lower than that of the second feature.

In the description of this specification, descriptions referring to the terms "one embodiment", "some embodiments", "examples", "specific examples", or "some examples" mean that specific features, structures, materials, or characteristics described with reference to this embodiment or example are included in at least one embodiment or example of this application. In this specification, schematic expression of the above terms does not necessarily specific to the same embodiment or example. Moreover, the described specific features, structures, materials, or characteristics can be combined in any one or more embodiments or examples appropriately. In addition, a person skilled in the art can integrate or combine different embodiments or examples and characteristics of different embodiments or examples described in this specification, provided that they do not conflict with each other.

Although the embodiments of this application have already been illustrated and described above, it will be understood that the embodiments are examples but will not be understood as a limitation on this application. A person of ordinary skill in the art can make changes, modifications, replacements, or variations to the embodiments within the scope of this application.

## Claims

1.  A battery cell (100), comprising:

    a housing assembly (1); and
    an electrode core (2), wherein the electrode core (2) is provided in the housing assembly (1), the electrode core (2) comprises a plurality of electrode plates (21), two ends of each electrode plate (21) are respectively provided with a tab (22) and a slitting edge (23), the plurality of electrode plates (21) comprise first electrode plates (211) and second electrode plates (212) having opposite polarities, the first electrode plates (211) and the second electrode plates (212) are sequentially arranged, and the tabs (22) of the first electrode plates (211) and the tabs (22) of the second electrode plates (212) are located on different sides of the electrode core (2); and
    the tabs (22) located on a same side are electrically connected to a first connection surface (31) of a connection member (3) by using a transition piece (6), and on a same side of the electrode core (2), a spacing between the first connection surface (31) and the slitting edges (23) is L, a quantity of electrode plates (21) with same polarity is n, a quantity of bent layers of the tabs (22) is m, a quantity of bent layers of the transition piece (6) is m1, an overall thickness of the transition piece (6) is t1, a thickness of the battery cell (100) is T, a thickness of the electrode plate (21) is t, and the battery cell (100) satisfies the following relational expression:

$$0.5 \leqslant N = (L - 5 - 0.1*T/2)/(n*m*t + m1*t1) \leqslant 15.$$

2.  The battery cell (100) according to claim 1, wherein a value of the quantity of bent layers m of the tabs (22) is $1 \leqslant m \leqslant 3$; and/or
    a value of the quantity of bent layers m1 of the transition piece (6) is $1 \leqslant m1 \leqslant 3$.

3.  The battery cell (100) according to any one of claims 1 to 2, wherein a value of a length H of the battery cell (100) is 400 mm $\leqslant H \leqslant$ 1500 mm.

4.  The battery cell (100) according to claim 3, wherein a value of a width W of the battery cell (100) is 80 mm $\leqslant W \leqslant$ 240 mm.

5.  The battery cell (100) according to claim 4, wherein a value of the thickness T of the battery cell (100) is 10 mm $\leqslant T \leqslant$ 40 mm.

6.  The battery cell (100) according to any one of claims 1 to 5, wherein the tabs (22) of the electrode plates (21) having opposite polarities are located on two sides of the electrode core (2) in a length direction of the electrode core (2).

7.  The battery cell (100) according to claim 6, wherein the electrode core (2) comprises two opposite first surfaces (24),

and an area of the first surface (24) is greater than an area of another surface of the electrode core (2); and the battery cell (100) further comprises two insulating films (4), and the two insulating films (4) are respectively attached to the two first surfaces (24).

8. The battery cell (100) according to claim 7, wherein in a width direction of the electrode core (2), side edges (41) of the two insulating films (4) on a same side are lap-jointed to isolate the electrode core (2) from the housing assembly (1).

9. The battery cell (100) according to any one of claims 7 to 8, wherein in the width direction of the electrode core (2), the electrode core (2) is provided with opposite second surfaces (25), the second surface (25) is provided with an adhesive member, and there is an overlapping region between the adhesive member and each insulating film (4).

10. The battery cell (100) according to claim 8, wherein a width of the electrode core (2) is set to W, and a thickness of the electrode core (2) is set to T; and
in a direction parallel to the width direction of the electrode core (2), a width of the insulating film (4) is set to W2, and the following is satisfied: W+T≤W2≤W+2T.

11. The battery cell (100) according to any one of claims 7 to 10, wherein the housing assembly (1) comprises a housing body (11) and cover plates (12), and in the length direction of the electrode core (2), the cover plates (12) are provided at two ends of the housing body (11) to define an accommodating chamber configured to place the electrode core (2), and each cover plate (12) is provided with a terminal post (13).

12. The battery cell (100) according to claim 11, further comprising spacer rings (5), wherein the spacer ring (5) is located between an inner side of the cover plate (12) and an end part of the electrode core (2), the spacer ring (5) comprises a support portion (51) abutting against the electrode core (2), and each of two sides of the tabs (22) is provided with the support portion (51) in the width direction of the electrode core (2).

13. The battery cell (100) according to claim 12, wherein in the direction parallel to the width direction of the electrode core (2), the width of the electrode core (2) is set to W, a support width of the support portion (51) is set to L4, and the following is satisfied: L4≤1/3W.

14. A battery apparatus, comprising:

   a box; and
   a plurality of battery cells (100), wherein the battery cell (100) is the battery cell (100) according to any one of claims 1 to 13, and the plurality of battery cells (100) are provided in the box.

15. An electrical device, comprising the battery apparatus according to claim 14.

**100**

FIG. 1

FIG. 2

FIG. 3

FIG. 4

FIG. 5

| Code | Battery cell 1 | | Battery cell 2 | | Battery cell 3 | |
|---|---|---|---|---|---|---|
| | Positive electrode | Negative electrode | Positive electrode | Negative electrode | Positive electrode | Negative electrode |
| n | 37 | 38 | 37 | 38 | 37 | 38 |
| t | 0.013 | 0.006 | 0.013 | 0.006 | 0.013 | 0.006 |
| **L** | **8.81** | **9** | **6.5** | **6.2** | **40** | **30** |
| m | 2 | 2 | 2 | 2 | 2 | 2 |
| m1 | 2 | 2 | 2 | 2 | 2 | 2 |
| t1 | 0.6 | 0.5 | 0.6 | 0.5 | 0.6 | 0.5 |
| **T** | **13.5** | **13.5** | **13.5** | **13.5** | **13.5** | **13.5** |
| N | 1.45 | 2.28 | 0.38 | 0.36 | 15.88 | 16.71 |

| Code | Battery cell 4 | | Battery cell 5 | | Battery cell 6 | |
|---|---|---|---|---|---|---|
| | Positive electrode | Negative electrode | Positive electrode | Negative electrode | Positive electrode | Negative electrode |
| n | 54 | 55 | 54 | 55 | 54 | 55 |
| t | 0.013 | 0.006 | 0.013 | 0.006 | 0.013 | 0.006 |
| **L** | **10** | **9** | **7** | **6.5** | **58** | **35** |
| m | 2 | 2 | 2 | 2 | 2 | 2 |
| m1 | 2 | 2 | 2 | 2 | 2 | 2 |
| t1 | 1 | 0.6 | 1 | 0.6 | 1 | 0.6 |
| **T** | **19.6** | **19.6** | **19.6** | **19.6** | **19.6** | **19.6** |
| N | 1.18 | 1.62 | 0.30 | 0.28 | 15.28 | 15.60 |

| Code | Battery cell 7 | | Battery cell 8 | | Battery cell 9 | |
|---|---|---|---|---|---|---|
| | Positive electrode | Negative electrode | Positive electrode | Negative electrode | Positive electrode | Negative electrode |
| n | 65 | 66 | 65 | 66 | 65 | 66 |
| t | 0.013 | 0.006 | 0.013 | 0.006 | 0.013 | 0.006 |
| **L** | **13** | **13** | **8** | **7** | **70** | **38** |
| m | 2 | 2 | 2 | 2 | 2 | 2 |
| m1 | 2 | 2 | 2 | 2 | 2 | 2 |
| t1 | 1.2 | 0.6 | 1.2 | 0.6 | 1.2 | 0.6 |
| **T** | **28.2** | **28.2** | **28.2** | **28.2** | **28.2** | **28.2** |
| N | 1.61 | 3.31 | 0.39 | 0.30 | 15.55 | 15.86 |

FIG. 6

## INTERNATIONAL SEARCH REPORT

| International application No. |
| --- |
| **PCT/CN2024/096436** |

**A. CLASSIFICATION OF SUBJECT MATTER**

H01M 50/533(2021.01)i; H01M10/04(2006.01)i; H01M50/40(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, ENTXTC, ENTXT, DWPI, CNKI, Elsevier Science Direct, ISI Web of Science, 读秀, DUXIU, 超星科技数字图书馆, CHAOXING DIGITAL LIBRARY: 比亚迪股份有限公司, 邓洞军, 袁万颂, 梁桂海, 陈广安, 王信月, 电池, 单体, 壳, 极芯, 极耳, 分切边, 过渡片, 弯层, 极片, battery, battery module, battery monomer, shell, case, pole core, pole ear, curved layer, pole sheet, pole piece

**C. DOCUMENTS CONSIDERED TO BE RELEVANT**

| Category* | Citation of document, with indication, where appropriate, of the relevant passages | Relevant to claim No. |
| --- | --- | --- |
| A | CN 216055078 U (BYD CO., LTD. et al.) 15 March 2022 (2022-03-15) description, paragraphs [0041]-[0063], and figures 1-3 | 1-15 |
| A | CN 114204224 A (BYD CO., LTD.) 18 March 2022 (2022-03-18) entire document | 1-15 |
| A | CN 208189697 U (BYD CO., LTD.) 04 December 2018 (2018-12-04) entire document | 1-15 |
| A | CN 107968182 A (CONTEMPORARY AMPEREX TECHNOLOGY CO., LTD.) 27 April 2018 (2018-04-27) entire document | 1-15 |
| A | CN 113871807 A (BYD CO., LTD.) 31 December 2021 (2021-12-31) entire document | 1-15 |
| A | CN 113748561 A (JIANGSU CONTEMPORARY AMPEREX TECHNOLOGY LTD.) 03 December 2021 (2021-12-03) entire document | 1-15 |

☑ Further documents are listed in the continuation of Box C. ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 July 2024** | **26 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/096436**

### C. DOCUMENTS CONSIDERED TO BE RELEVANT

| Category* | Citation of document, with indication, where appropriate, of the relevant passages | Relevant to claim No. |
|---|---|---|
| A | JP 2013171784 A (SANYO ELECTRIC CO., LTD.) 02 September 2013 (2013-09-02) entire document | 1-15 |
| A | WO 2023029130 A1 (DONGGUAN NVT TECHNOLOGY LIMITED) 09 March 2023 (2023-03-09) entire document | 1-15 |

Form PCT/ISA/210 (second sheet) (July 2022)

**INTERNATIONAL SEARCH REPORT**
Information on patent family members

International application No.

**PCT/CN2024/096436**

| Patent document cited in search report | | | Publication date (day/month/year) | Patent family member(s) | | | Publication date (day/month/year) |
|---|---|---|---|---|---|---|---|
| CN | 216055078 | U | 15 March 2022 | None | | | |
| CN | 114204224 | A | 18 March 2022 | EP | 3961799 | A1 | 02 March 2022 |
| | | | | WO | 2022042495 | A1 | 03 March 2022 |
| | | | | KR | 20230049687 | A | 13 April 2023 |
| | | | | CN | 114204224 | B | 13 June 2023 |
| | | | | US | 2023207982 | A1 | 29 June 2023 |
| CN | 208189697 | U | 04 December 2018 | KR | 20200135847 | A | 03 December 2020 |
| | | | | EP | 3770995 | A1 | 27 January 2021 |
| | | | | JP | 7090172 | B2 | 23 June 2022 |
| | | | | US | 2021066700 | A1 | 04 March 2021 |
| | | | | WO | 2019179232 | A1 | 26 September 2019 |
| | | | | JP | 2021518974 | W | 05 August 2021 |
| CN | 107968182 | A | 27 April 2018 | EP | 3512001 | A1 | 17 July 2019 |
| | | | | EP | 3512001 | B1 | 29 September 2021 |
| | | | | US | 2019221877 | A1 | 18 July 2019 |
| | | | | US | 10651498 | B2 | 12 May 2020 |
| | | | | CN | 107968182 | B | 15 December 2023 |
| | | | | CN | 111785904 | A | 16 October 2020 |
| | | | | CN | 111785904 | B | 17 August 2021 |
| CN | 113871807 | A | 31 December 2021 | None | | | |
| CN | 113748561 | A | 03 December 2021 | US | 2023187788 | A1 | 15 June 2023 |
| | | | | WO | 2021184491 | A1 | 23 September 2021 |
| | | | | EP | 3910724 | A1 | 17 November 2021 |
| | | | | EP | 3910724 | C0 | 25 October 2023 |
| | | | | US | 2022115748 | A1 | 14 April 2022 |
| | | | | US | 11450931 | B2 | 20 September 2022 |
| | | | | CN | 111048728 | A | 21 April 2020 |
| | | | | CN | 111048728 | B | 23 June 2020 |
| | | | | CN | 113748561 | B | 10 May 2024 |
| JP | 2013171784 | A | 02 September 2013 | None | | | |
| WO | 2023029130 | A1 | 09 March 2023 | CN | 113871762 | A | 31 December 2021 |
| | | | | US | 2023061397 | A1 | 02 March 2023 |
| | | | | WO | 2023029130 | A1 | 09 March 2023 |
| | | | | EP | 4170780 | A1 | 26 April 2023 |
| | | | | IN | 202217019618 | A | 05 May 2023 |

Form PCT/ISA/210 (patent family annex) (July 2022)

**REFERENCES CITED IN THE DESCRIPTION**

**Patent documents cited in the description**

- CN 2023111355270